# EUROPEAN PATENT SPECIFICATION

(11) **EP 2 016 784 B1**
(45) Date of publication and mention of the grant of the patent: **07.10.2009**
(21) Application number: 07728576.5
(22) Date of filing: 26.04.2007
(51) Int. Cl.: H04W 76/00

(54) **ONE-TO-ONE RELATIONSHIP BETWEEN NETWORK LAYER SERVICE ACCESS POINT (NSAPI) AND USER-DATA SERVICE ACCESS POINT (SAPI) IDENTIFIERS**
EINDEUTIGE BEZIEHUNG ZWISCHEN KENNUNGEN DES VERMITTLUNGSSCHICHTDIENSTZUGANGSPUNKTS (NSAPI) UND DES BENUTZERDATENDIENSTZUGANGSPUNKTS (SAPI)
RELATION INDIVIDUELLE ENTRE DES IDENTIFIANTS DE NSAPI (POINT D'ACCES A UN SERVICE DE COUCHE RESEAU) ET A DES IDENTIFIANTS DE SAPI (POINT D'ACCES A UN SERVICE) DE DONNEES D'UTILISATEUR

(30) Priority: 28.04.2006 US 795791 P; 28.06.2006 US 816380 P; 21.08.2006 US 822975 P; 13.04.2007 US 734940
(43) Date of publication of application: 21.01.2009
(73) Proprietor: Telefonaktiebolaget LM Ericsson (PUBL), 164 83 Stockholm (SE)
(72) Inventor: HERRERO VERON, Christian, S-226 49 Lund (SE); JOHANNESSON, Regina, 226 47 Lund (SE)
(74) Representative: Bratt, Hanna Catharina
(86) International application number: PCT/EP2007/054121
(87) International publication number: WO 2007/128707

(56) References cited:
- EP-A1- 1 096 814
- WO-A-02/30056
- WO-A-20/05125256
- US-A1- 2005 007 981
- "3GPP TS 44.065 V6.5.0 (2005-09); 3rd Generation Partnership Project; Technical Specification Group Core Network and Terminals; Mobile Station (MS) - Serving GPRS Support Node (SGSN); Subnetwork Dependent Convergence Protocol (SNDCP) (Release 6)" ETSI STANDARDS, EUROPEAN TELECOMMUNICATIONS STANDARDS INSTITUTE, SOPHIA-ANTIPOLIS, FR, September 2005 (2005-09), pages 1-53, XP014032933 ISSN: 0000-0001

## Description

### BACKGROUND

Conventional Global System for Mobile communications (GSM) networks rely on activated Packet Data Protocol (PDP) contexts to provide packet data services to mobile stations. A PDP context is a data structure present in the mobile station and at the network that contains the session information associated with a subscriber's active packet data session. Each PDP context is associated with one or more packet data services, where each service associated with a single PDP context has similar operating characteristics. Further, each PDP context is associated with a unique network service access point in the network layer and identified by a Network Service Access Point Identifier (NSAPI). Conventional GSM networks provide up to eleven unique NSAPIs, which enables each mobile station to establish up to eleven PDP contexts.

NSAPIs are used by the Sub Network Dependent Convergence Protocol (SNDCP), which interfaces the network layer with the data link layer. The SNDCP is situated between the Logical Link Control (LLC) protocol in the data link layer and a packet data protocol, e.g., Internet Protocol (IP), in the network layer. In addition to several other packet data and control functions, the SNDCP multiplexes network layer Packet Data Units (PDUs) from one or several network layer entities onto the appropriate LLC Service Access Point Identifiers (SAPIs). The LLC protocol in conventional GSM networks provides up to four unique user-data SAPIs.

Because conventional GSM networks map eleven NSAPIs to four user-data SAPIs, the SNDCP may multiplex one or more NSAPIs onto a single user-data SAPI. Reference is made to the prior art document WO 2005/125256 A1 in this respect. In some cases, each NSAPI multiplexed onto a single user-data SAPI may be required to have one or more equivalent Quality of Service (QoS) attributes. Such QoS multiplexing limits the number of different QoS profiles for a particular mobile station, which in turn may overly limit the type of applications or services available to a subscriber. It will further be appreciated that the rules guiding the multiplexing operations are very open. Thus, different service providers often have different multiplexing implementations and/or infrastructures. The variations in multiplexing implementations and/or infrastructures make inter-operability in multi-vendor environments difficult.

### SUMMARY

The present invention comprises a communication interface and a method for establishing the communication interface for communications between a mobile station and a serving network node over a Gb interface in a GSM network. The communication interface comprises a network layer, a link layer, and control logic. The network layer has a plurality of network service access points identified by Network Service Access Point Identifiers NSAPIs, and the link layer has a plurality of user-data link service access points identified by Service Access Point Identifiers SAPIs, wherein the number of network service access points NSAPIs, equals the number of link service access points SAPIs. In one embodiment, the number of network service access points NSAPIs is limited to equal the number of link service access points SAPIs. In another embodiment, the number of link service access points SAPIs is expanded to equal the number of network service access points NSAPIs. In both cases, the control logic performs one-to-one mapping between the network service access points NSAPIs and the link service access points SAPIs.

### BRIEF DESCRIPTION OF THE DRAWINGS

Figure 1 shows a block diagram of a GSM network.
Figure 2 shows the GSM protocol stack.
Figure 3 shows a conventional communication interface for an SGSN or mobile station in the GSM network.
Figure 4 shows the format for exemplary NSAPI and user-data SAPI information elements.
Figure 5 shows a communication interface according to one exemplary embodiment of the present invention.
Figure 6 shows a communication interface according to another exemplary embodiment of the present invention.
Figure 7 shows a call flow diagram for a parameter negotiation process between a mobile station and SGSN according to one exemplary embodiment.
Figure 8 shows a call flow diagram for an attach/routing area update process between a mobile station and SGSN according to one exemplary embodiment.

### DETAILED DESCRIPTION

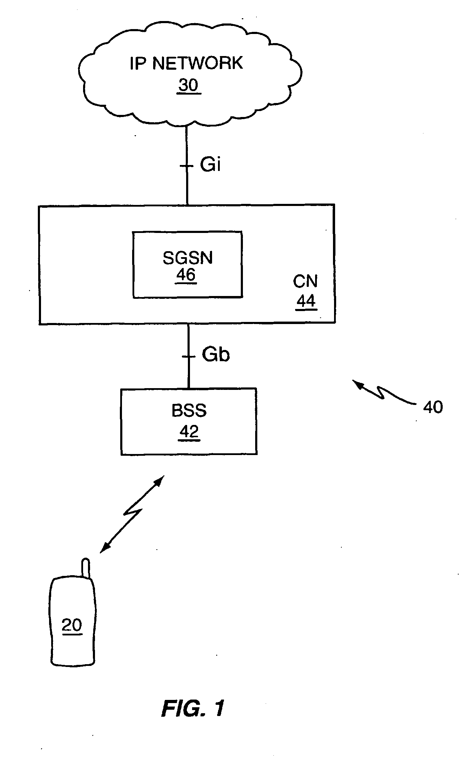

To better present the present invention, the following first briefly describes a GSM network. Figure 1 shows a mobile station 20 exchanging packet data with an IP network 30 via a GSM network 40. The GSM network 40 includes a base station subsystem (BSS) 42 and a core network (CN) 44 comprising a serving GPRS support node (SGSN) 46. For downlink packet data communications, the SGSN 46 communicates packet data from the IP network 30 to the BSS 42 over a Gb interface. The BSS 42 communicates the packet data to the appropriate mobile station 20 over a wireless interface. For uplink packet data communications, the SGSN 46 communicates packet data received from a mobile station 20 via BSS 42 to the IP network 30 over a Gi interface.

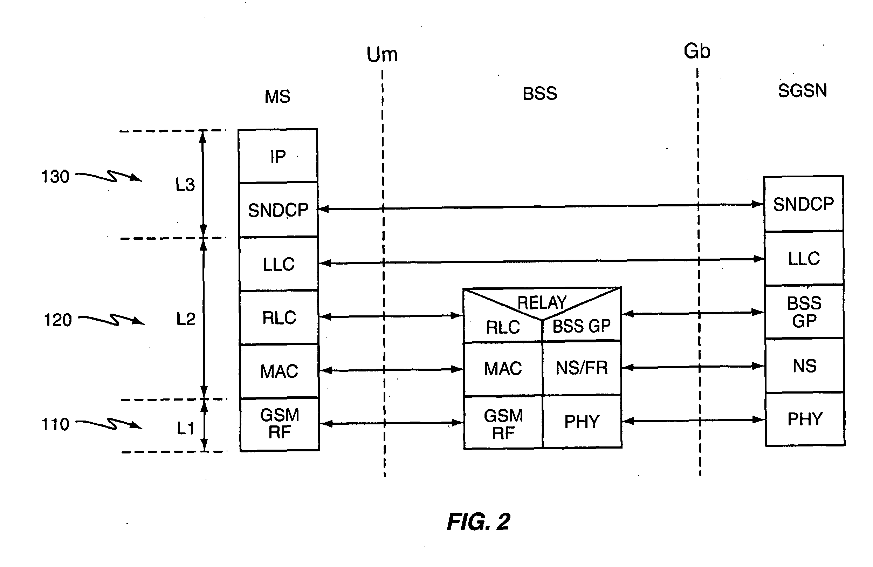

Figure 2 shows the layered GSM protocol structure for the mobile station 20 and SGSN 46. The protocol stack comprises a physical layer (L1) 110, a data link layer (L2) 120, and a network layer (L3) 130. In the mobile station 20, the physical layer 110 comprises a GSM radio access specific protocol (GSM RF), the data link layer 120 comprises a Medium Access Control (MAC) protocol, a Radio Link Control (RLC) protocol, and a Logical Link Control (LLC) protocol, and the network layer 130 comprises the SNDCP and Internet protocol (IP). The GSM RF, MAC, and RLC protocols in the mobile station 20 interface with the corresponding GSM RF, MAC, and RLC protocols in the BSS 42 over the Um (air) interface, as well known in the art. The LLC and SNDCP in the mobile station 20 interface with the corresponding LLC and SNDCP in the SGSN 46 over a Um/Gb interface.

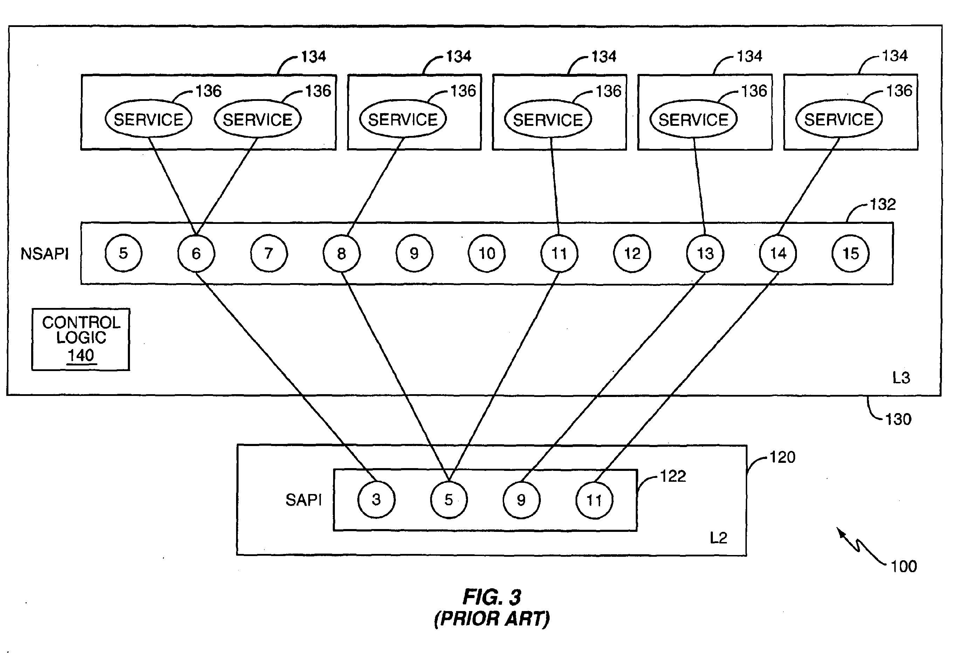

The SNDCP interfaces the network layer 130 with the data link layer 120 by mapping NSAPIs associated with packet data services in the network layer 130 to user-data SAPIs in the link layer 120. Figure 3 shows a conventional communication interface 100 between the data link layer 120 and the network layer 130 for a SGSN 46 and/or a mobile station 20. The link layer 120 has four unique link service access points identified by four user-data SAPIs 122 (3, 5, 9, and 11), while the network layer 130 has eleven unique network service access points identified by eleven unique NSAPIs 132 (5 - 15). Each NSAPI 132 uniquely identifies a PDP context 134 associated with one or more packet data services 136.

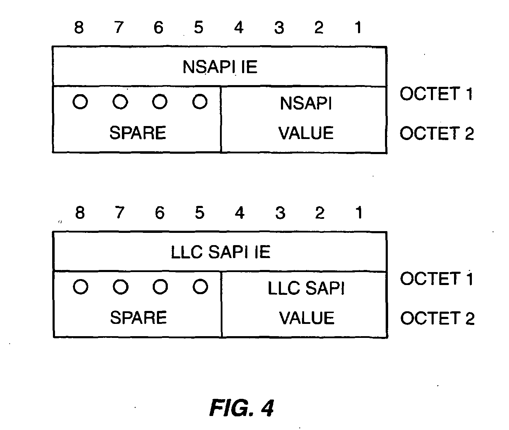

To send and receive packet data for a packet data service 136 the mobile station 20 and the SGSN 46 activate a PDP context 134. The activated PDP context is uniquely identified by an NSAPI 132. To establish a PDP context 134, the mobile station 20 sends an Activate PDP Context Request message including a requested NSAPI 132 and user-data SAPI 122 to the SGSN 46. In response, the SGSN 46 may accept or reject the request. If the SGSN 46 accepts the request, it allocates a user-data SAPI 122 for the requested NSAPI 132 to the packet data service 136 and sends an Activate PDP Context Accept message to the mobile station 20. The Activate PDP Context Request message identifies the requested NSAPI 132 and user data SAPI 122 to the SGSN 46 using an NSAPI Information Element (IE) and a SAPI IE, respectively. The Activate PDP Context Accept message identifies the allocated user-data SAPI 122 for the particular requested NSAPI 132 to the mobile station 20 using a SAPI IE. Figure 4 shows the format of one exemplary NSAPI IE and SAPI IE. The last four bits of each information element identify the selected and allocated NSAPI and user-data SAPI for the packet data session according to the requirements shown in Tables 1 and 2.

**Table 1**

| NSAPI bits | | | | Name/service |
|---|---|---|---|---|
| **4** | **3** | **2** | **1** | |
| 0 | 0 | 0 | 0 | reserved |
| 0 | 0 | 0 | 1 | reserved |
| 0 | 0 | 1 | 0 | reserved |
| 0 | 0 | 1 | 1 | reserved |
| 0 | 1 | 0 | 0 | reserved |
| 0 | 1 | 0 | 1 | NSAPI 5 |
| 0 | 1 | 1 | 0 | NSAPI 6 |
| 0 | 1 | 1 | 1 | NSAPI 7 |
| 1 | 0 | 0 | 0 | NSAPI 8 |
| 1 | 0 | 0 | 1 | NSAPI 9 |
| 1 | 0 | 1 | 0 | NSAPI 10 |
| 1 | 0 | 1 | 1 | NSAPI 11 |
| 1 | 1 | 0 | 0 | NSAPI 12 |
| 1 | 1 | 0 | 1 | NSAPI 13 |
| 1 | 1 | 1 | 0 | NSAPI 14 |
| 1 | 1 | 1 | 1 | NSAPI 15 |

**Table 2**

| user-data SAPI bits | | | | Name/service |
|---|---|---|---|---|
| **4** | **3** | **2** | **1** | |
| 0 | 0 | 0 | 0 | reserved |
| 0 | 0 | 0 | 1 | LLGMM |
| 0 | 0 | 1 | 0 | TOM2 |
| 0 | 0 | 1 | 1 | LL3 |
| 0 | 1 | 0 | 0 | reserved |
| 0 | 1 | 0 | 1 | LL5 |
| 0 | 1 | 1 | 0 | reserved |
| 0 | 1 | 1 | 1 | LLSMS |
| 1 | 0 | 0 | 0 | TOM8 |
| 1 | 0 | 0 | 1 | LL9 |
| 1 | 0 | 1 | 0 | reserved |
| 1 | 0 | 1 | 1 | LL11 |
| 1 | 1 | 0 | 0 | reserved |
| 1 | 1 | 0 | 1 | reserved |
| 1 | 1 | 1 | 0 | reserved |
| 1 | 1 | 1 | 1 | reserved |

The network layer 130 in the conventional communication interface 100 also includes control logic 140 that maps the allocated NSAPI 132 to the allocated user-data SAPI 122. When the number of active PDP contexts 134 associated with the network layer 130 exceeds the number of user-data SAPIs 122 in the link layer 120, control logic 140 multiplexes two or more allocated NSAPIs 132 to one user-data SAPI 122 using any known multiplexing technique. In the example shown in Figure 3, NSAPI 8 and 11 are multiplexed to SAPI 5. As discussed above, this multiplexing operation limits the number and/or type of packet data services 136 available to a mobile station 20. In addition, the open rules guiding the multiplexing operations are very broad and allow for very different implementations, which may cause inter-operability problems in multi-vendor environments.

The present invention provides one-to-one mapping between NSAPIs 132 in the network layer 130 and user-data SAPIs 122 in the link layer 120. In general, a communication interface for an SGSN 46 and/or a mobile station 20 according to the present invention provides an equal number of NSAPIs 132 and user-data SAPIs 122 for GSM packet data services. In one embodiment, the communication interface limits the number of NSAPIs 132 to equal the number of user-data SAPIs 122, e.g., four. In another embodiment, the communication interface expands the number of user-data SAPIs 122 to equal the number of NSAPIs 132, e.g., eleven. For simplicity, mobile station 20 may represent a legacy mobile station having a conventional communication interface 100 or a mobile station having a communication interface 200, 300 according to either the limited or expanded embodiments.

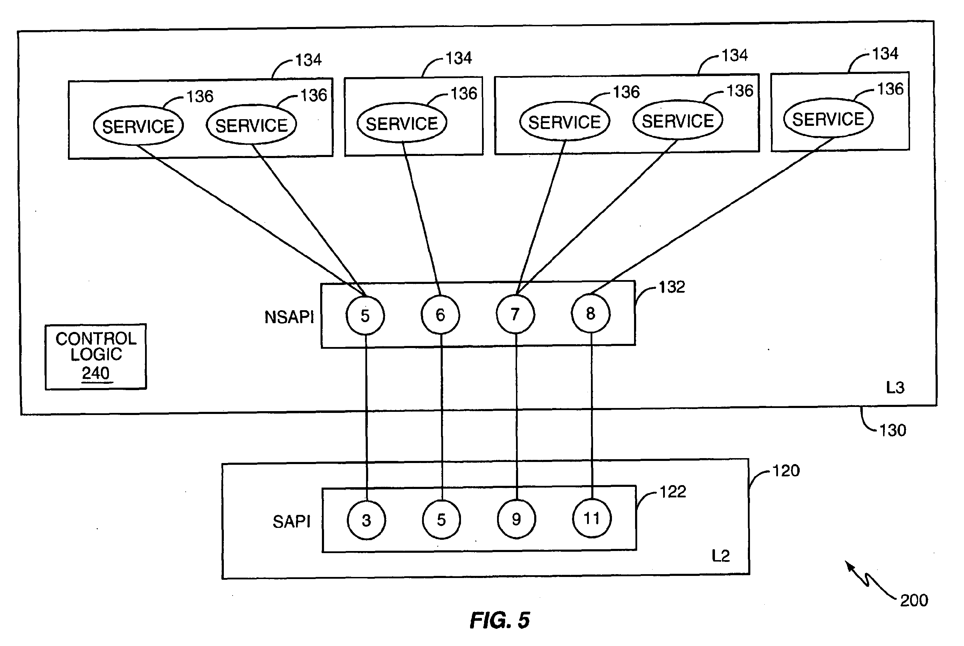

Figure 5 shows one exemplary communication interface 200 for the limited embodiment. Communication interface 200 limits the number of NSAPIs 132 associated with SNDCP in the network layer 130 to equal the number of user-data SAPIs 122 in link layer 120. In the example shown in Figure 5, only four NSAPIs 132 (5 - 8) are available. Each NSAPI 132 uniquely identifies a PDP context 134 associated with one or more packet data services 136. The control logic 240 maps each NSAPI 132 to one user-data SAPI 122. The control logic 240 may associate multiple packet data services 136 having similar performance characteristics with a single PDP context 134, and therefore, a single NSAPI 132, as shown in Figure 5. It will be appreciated that while Figure 5 shows NSAPIs 5-8, any four of the original eleven NSAPIs 132 may be used, e.g.. {10, 11, 12, 13}, {5, 7, 9, 11}, etc., at any given time. Further, it will be appreciated that any one NSAPI 132 may be mapped to any one user-data SAPI 122.

To ensure backwards compatibility with legacy mobile stations 20 and/or legacy SGSNs, which have more than four NSAPIs 122, a communication interface 200 for an SGSN 46 according to the limited embodiment also limits the number of NSAPIs allocated to a mobile station 20 having a conventional control interface 100. If a mobile station 20 requests more than four packet data services 136, the control logic 240 in the SGSN 46 may associate multiple packet data services 136 having similar service performance characteristics with a single PDP context 134, and therefore, a single NSAPI 132, as shown in Figure 5. When the control logic 140 of a mobile station 20 attempts to activate more than four PDP contexts 134, the control logic 240 in the limited SGSN communication interface 200 sends a reject message to the mobile station 20, e.g., an Activate PDP Context Reject message. In one embodiment, the reject message may identify the number of allowed PDP contexts 134. It will be appreciated that because a mobile station 20 having a limited communication interface 200 will only attempt to activate up to four PDP contexts 134, such mobile stations 20 are fully compatible with SGSNs 44 having a conventional communication interface 100, which allows up to eleven PDP contexts 134.

The present invention also addresses handover of a mobile station 20 between an SGSN 46 having a conventional communication interface 100 and an SGSN having a limited communication interface 200. Handover from an SGSN 46 with a limited communication interface 200 to an SGSN 46 with a conventional communication interface 100 does not require any modification. This is because the existing number of allocated NSAPIs 132 in this type of handover will always be less than the number of available NSAPIs 132 in the SGSN 46 receiving control of the mobile station 20. However, handover of a mobile station 20 from an SGSN 46 with a conventional communication interface 100 to an SGSN 46 with a limited communication interface 200 may require some modifications to the NSAPI allocation when the number of allocated NSAPIs 132 exceeds the number of NSAPIs 132 in the SGSN 46 receiving control of the mobile station 20. In one embodiment, the control logic 240 in the receiving SGSN 46 may deactivate one or more PDP contexts 134 to ensure that there are no more than four active PDP contexts 134, which require no more than four NSAPIs 132. It will be appreciated that the control logic 240 may deactivate the PDP contexts 134 according to any predetermined criteria. For example, control logic 240 may deactivate one or more PDP contexts 134 based on a performance criteria, frequency of use criteria, etc.

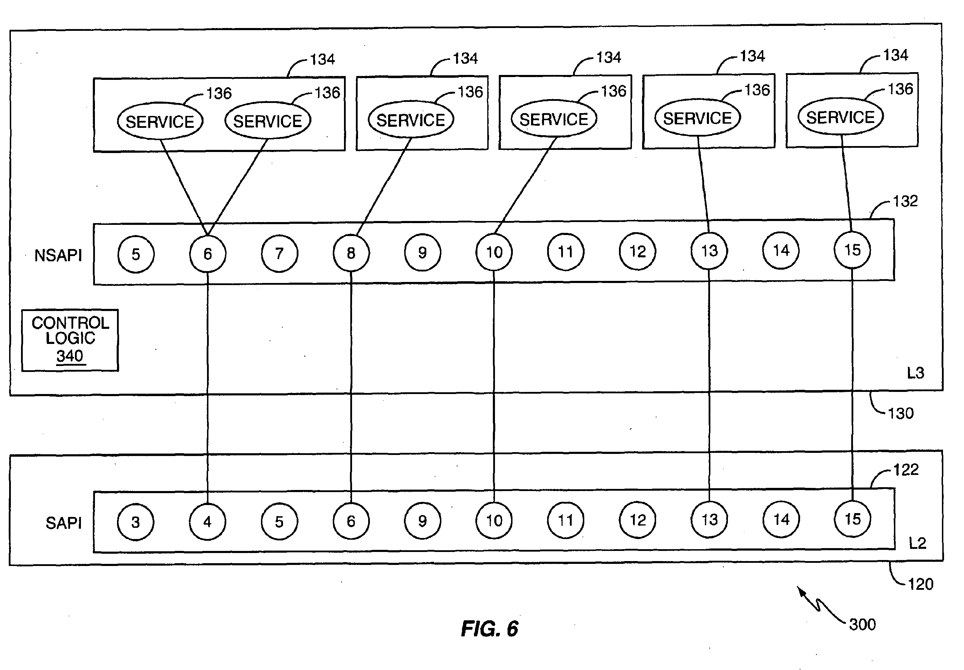

Figure 6 shows one exemplary communication interface 300 for the expanded embodiment, which expands the number user-data SAPIs 122 in the link layer 120 to equal the number of NSAPIs 132 in the network layer 130. As shown in Figure 6 and Table 3, eleven user-data SAPIs 122 (3 - 6, 9 - 15) are available for one-to-one mapping with the eleven NSAPIs 132 (5 - 15). The control logic 340 maps each NSAPI 132 to one user-data SAPI 122, where each NSAPI 132 uniquely identifies a PDP context 134 associated with one or more packet data service 136. The control logic 340 may associate multiple packet data services 136 having similar performance characteristics with a single PDP context 134, and therefore, a single NSAPI 132, as shown in Figure 6.

**Table 3**

| user-data SAPI bits | | | | Name/service |
|---|---|---|---|---|
| **4** | **3** | **2** | **1** | |
| 0 | 0 | 0 | 0 | reserved |
| 0 | 0 | 0 | 1 | LLGMM |
| 0 | 0 | 1 | 0 | TOM2 |
| 0 | 0 | 1 | 1 | LL3 |
| 0 | 1 | 0 | 0 | LL4 |
| 0 | 1 | 0 | 1 | LL5 |
| 0 | 1 | 1 | 0 | LL6 |
| 0 | 1 | 1 | 1 | LLSMS |
| 1 | 0 | 0 | 0 | TOM8 |
| 1 | 0 | 0 | 1 | LL9 |
| 1 | 0 | 1 | 0 | LL10 |
| 1 | 0 | 1 | 1 | LL11 |
| 1 | 1 | 0 | 0 | LL12 |
| 1 | 1 | 0 | 1 | LL13 |
| 1 | 1 | 1 | 0 | LL14 |
| 1 | 1 | 1 | 1 | LL15 |

To ensure backwards compatibility with legacy devices, which only have four user-data SAPIs 122 in the link layer 120, the control logic 340 in the expanded communication interface 300 for an SGSN 46 and/or a mobile station 20 may include an indication of said support in exchanged control messages. For example, the indicator may be included in an information element of a control message communicated between SGSN 46 and mobile station 20. The mobile stations 20 and/or SGSNs 44 having the expanded communication interface 300 includes the indicator in the transmitted control messages and properly interprets the indicator in the received control messages. In one embodiment, the indicator may comprise one or more bits that identify the version number of the controlling protocol, the number of available user-data SAPIs 122, etc. It will be appreciated that the mobile stations 20 and/or SGSNs 44 having the conventional communication interface 100 do not include an indicator with transmitted control message and ignore any indicators included in received control messages.

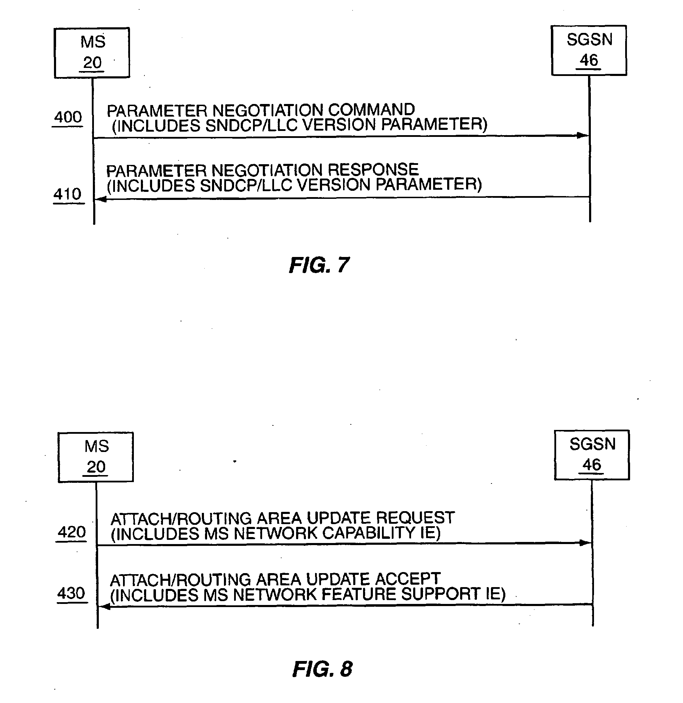

In one embodiment, the mobile station 20 and/or the SGSN 46 may include the indicator with a control message communicated during a parameter negotiation process, such as an exchange identifier (XID) negotiation procedure. Figure 7 shows a call flow diagram for one exemplary negotiation process. To communicate with the SGSN 46, a mobile station 20 includes an indicator in a transmitted control message, such as a parameter negotiation command (step 400). One exemplary parameter negotiation command includes an XID command. In response, the SGSN 46 sends a parameter negotiation response, i.e., an XID response, to the mobile station 20 that includes the indicator (step 410). It will be appreciated the call flow diagram shown in Figure 7 may be reversed, such that the SGSN 46 sends a parameter negotiation command to the mobile station 20, and the mobile station 20 answers with a parameter negotiation response.

In another embodiment, mobile station 20 and/or SGSN 46 may include the indicator with an attach message or a routing area update message. Figure 8 shows a call flow diagram for one exemplary attach/routing area update procedures. The mobile station 20 sends an Attach Request or Routing Area Update Request message to the SGSN 46 (step 430). In response, the SGSN 46 may include the indicator with an Attach Accept or Routing Area Update Accept message (step 440). For example, the mobile station 20 may modify the MS Network Capabilities IE associated with the Attach/Routing Area Update Request messages to include the indicator, while the SGSN 46 may modify the Network Feature Support IE associated with the Attach/Routing Area Update Accept messages to include the indicator. Alternatively, the mobile station 20 and/or the SGSN 46 may put the indicator in a new information element and include the new information element with the control message.

The present invention also addresses handover of a mobile station 20 having NSAPIs 132 mapped to more than four user-data SAPIs 122 from an SGSN 46 with the expanded communication interface 300 to an SGSN 46 having a conventional communication interface 100 or a limited communication interface 200. Handover from an SGSN 46 with a conventional communication interface 100 or a limited communication interface 200 to an SGSN 46 with an expanded communication interface 300 does not require any modification. This is because the existing number of allocated NSAPIs 132 in this type of handover will always be less than or equal to the number user-data SAPIs 132 at the SGSN 46 receiving control of the mobile station 20. However, handover of a mobile station 20 from an SGSN 46 with an expanded communication interface 300 to an SGSN 46 with a conventional communication interface 100 or limited communication interface 200 may require some modifications to the existing NSAPI allocation when the number of allocated NSAPIs 132 exceeds the number of user-data SAPIs 122 in the SGSN 46 receiving control of the mobile station 20. In one embodiment, the control logic 140, 240 in the SGSN 46 receiving control of the mobile station 20 may deactivate one or more PDP contexts 134 to ensure that there are no more than four active PDP contexts 134, and therefore, no more than four allocated NSAPIs 132. It will be appreciated that the control logic 140, 240 may deactivate the PDP contexts 134 according to any predetermined criteria. For example, control logic 140, 240 may deactivate one or more PDP contexts 134 based on a performance criteria, frequency of use criteria, etc. Alternatively or in addition, the SGSN 46 receiving control of the mobile station 20 may determine whether two or more services 136 having similar performance parameters may be combined with a single PDP context 134, and therefore, multiplexed onto a single NSAPI 132 to reduce the number of allocated NSAPIs 132.

The present invention describes a method and apparatus for implementing one-to-one mapping between NSAPIs 132 in a network layer 130 and user-data SAPIs 122 in a link layer 120. Such one-to-one mapping removes the need for multiplexing multiple NSAPIs 132 onto a single user-data SAPI 122. By removing the multiplexing requirements, the present invention removes the multiplexing problems and constraints present in a conventional GSM network.

The present invention may, of course, be carried out in other ways than those specifically set forth herein without departing from essential characteristics of the invention. The present embodiments are to be considered in all respects as illustrative and not restrictive.

## Claims

1. A communication interface for communications between a mobile station (20) and a serving network node (46) over a Gb interface in a GSM network, the communication interface (200;300) being disposed in a node of said network and comprising:
a network layer (130) having a plurality of network service access points identified by Network Service Access Point Identifiers NSAPIs (132);
a link layer (120) having a plurality of user-data link service access points identified by Service Access Point Identifiers SAPIs (122),
**characterized in that**
the number of link service access points SAPIs (122) equals the number of network service access points NSAPIs (132); and **in that**
the communication interface further comprises control logic (140) configured to perform one-to-one mapping between said network service access points NSAPIs (132) and said link service access points SAPIs (122).

2. The communication interface of claim 1 wherein the number of network service access points NSAPI (132) is limited to equal the number of link service access points SAPIs (122).

3. The communication interface of claim 2 wherein the communication interface is disposed in the serving network node, and wherein the control logic (140) is further configured to:
receive a request message from the mobile station (20) for a new packet data session; and
send a reject message to the mobile station (20) when the number of active packet data contexts equals the number of link service access points SAPIs (122).

4. The communication interface of claim 3 wherein the reject message indicates the number active packet data contexts allowed for the mobile station (20).

5. The communication interface of claim 2 wherein the control logic (140) is further configured to:
determine the number of active packet data contexts for a mobile station (20) being handed over to the serving network node (46); and
if the number of active packet data contexts exceeds the number of network service access points NSAPIs (132) at the serving network node (46), perform one of the following:
deactivate one or more packet data contexts or
combine two or more active packet data contexts into a single packet data context associated with one network service access point NSAPI (132), the single data packet context being either an existing active packet data context or a new active packet data context.

6. The communication interface of claim 1 wherein the number of link service access points SAPIs (122) is expanded to equal the number of network service access points NSAPIs.

7. The communication interface of claim 6 wherein the communication interface is disposed in the serving network node (46), and wherein the control logic is further configured to receive a control message from the mobile station (20) that identifies the number of available link service access points SAPIs (122) in the mobile station (20), and wherein the control message comprises at least one of a parameter negotiation message, an attach request message, and a routing area request message.

8. The communication interface of claim 6 wherein the communication interface is disposed in the mobile station (20), and wherein the control logic (140) is further configured to receive a control message from the serving network node (46) that identifies the number of available link service access points SAPIs (122) in the serving network node (46), and wherein the the control message comprises at least one of a parameter negotiation response message, an attach accept message, and a routing area update accept message.

9. The communication interface of claim 6 wherein the control logic (140) is further configured to:
determine the number of active packet data contexts for a mobile station (20) being handed over to the serving network node (46); and
if the number of active packet data contexts exceeds the number of link service access points SAPIs (122) at the serving network node (46), perform one of the following:
deactivate one or more packet data contexts, or
combine two or more active packet data contexts into a single packet data context associated with one network service access point NSAPI (132).

10. A method for establishing a communication interface for communications between a mobile station (20) and a serving network node (46) over a Gb interface in a GSM network, the method comprising:
associating a plurality of network service access points identified by Network Service Access Point Identifiers NSAPIs (132) with a network layer (130) of a communication interface (200;300);
associating a plurality of user-data link service access points identified by Service Access Point Identifiers SAPIs (122) with a link layer (120) of the communication interface (200;300),
**characterized in that**
the number of link service access points SAPIs (122) equals the number of network service access points NSAPIs (132); and **in that**
the method further comprises performing one-to-one mapping between said network service access points NSAPIs (132) and said link service access points SAPIs (122).

11. The method of claim 10 wherein the number of network service access points NSAPIs (132) is limited to equal the number of link service access points SAPIs (122).

12. The method of claim 11 wherein the communication interface is disposed in the serving network node (46), the method further comprising:
receiving a request message from the mobile station (20) for a new packet data session; and
sending a reject message to the mobile station (20) when the number of active packet data contexts equals the number of link service access points SAPIs (122).

13. The method of claim 12 wherein the reject message indicates the number active packet data contexts allowed for the mobile station (20).

14. The method of claim 10 further comprising:
determining the number of active packet data contexts for a mobile station (20) being handed over to the serving network node (46); and
if the number of active packet data contexts exceeds the number of network service access points NSAPIs (132) at the serving network node (46), performing one of the following:
deactivating one or more packet data contexts, or
combining two or more active packet data contexts into a single packet data context associated with one network service access point NSAPI (132), the single data packet context being either an existing active packet data context or a new active packet data context.

15. The method of claim 10 wherein the number of link service access points SAPIs (122) is expanded to equal the number of network service access points NSAPIs (132).

16. The method of claim 15 wherein the communication interface is disposed in the serving network node (46), the method further comprising receiving a control message from the mobile station (20) that identifies the number of available link service access points SAPIs (122) in the mobile station (20), wherein the control messages comprises at least one of: a parameter negotiation message, an attach request message, and a routing area update request message.

17. The method of claim 15 wherein the communication interface is disposed in the mobile station (20), the method further comprising receiving a control message from the serving network node (46) that identifies the number of available link service access points SAPIs (122) in the serving network node (46), wherein the control message comprises at least one of: a parameter negotiation response message, an attach accept message, and a routing area update accept message.

18. The method of claim 15 further comprising:
determining the number of active packet data contexts for a mobile station being handed over to the serving network node (46); and
if the number of active packet data contexts exceeds the number of link service access points SAPIs (122) at the serving network node, performing one of the following:
deactivating one or more packet data contexts, or
combining two or more active packet data contexts into a single packet data context associated with one network service access point NSAPI (132).

## Patentansprüche

1. Kommunikationsschnittstelle für eine Kommunikation zwischen einer Mobilstation (20) und einem Dienstbereitstellungsnetzwerkknoten (46) über eine Gb-Schnittstelle in einem GSM-Netzwerk, wobei die Kommunikationsschnittstelle (200; 300) in einem Knoten des Netzwerks angeordnet ist und aufweist:
eine Netzwerkschicht (130) mit einer Mehrzahl von Netzwerkdienstzugangspunkten, die durch Netzwerkdienstzugangspunktkennungen NSAPIs (132) bezeichnet sind;
eine Verbindungsschicht (120) mit einer Mehrzahl von Nutzerdatenverbindungsdienstzugangspunkten, die durch Dienstzugangspunktkennungen SAPIs (122) bezeichnet sind,
**dadurch gekennzeichnet, dass**
die Anzahl von Verbindungsdienstzugangspunkten SAPIs (122) gleich der Anzahl von Netzwerkdienstzugangspunkten NSAPIs (132) ist; und **dadurch**, dass
die Kommunikationsschnittstelle ferner eine Steuerungslogik (140) aufweist, die dazu ausgestaltet ist, eine Eins-zu-Eins-Zuordnung zwischen den Netzwerkdienstzugangspunkten NSAPIs (132) und den Verbindungsdienstzugangspunkten SAPIs (122) durchzuführen.

2. Kommunikationsschnittstelle nach Anspruch 1, wobei die Anzahl von Netzwerkdienstzugangspunkten NSAPI (132) auf eine Anzahl beschränkt ist, die gleich der Anzahl von Verbindungsdienstzugangspunkten SAPIs (122) ist.

3. Kommunikationsschnittstelle nach Anspruch 2, wobei die Kommunikationsschnittstelle in dem Dienstbereitstellungsnetzwerkknoten angeordnet ist und wobei die Steuerungslogik (140) ferner ausgestaltet ist zum:
Empfangen einer Anforderungsnachricht von der Mobilstation (20) für eine neue Paket-Daten-Sitzung; und
Senden einer Zurückweisungsnachricht an die Mobilstation (20), wenn die Anzahl aktiver Paket-Daten-Kontexte gleich der Anzahl von Verbindungsdienstzugangspunkten SAPIs (122) ist.

4. Kommunikationsschnittstelle nach Anspruch 3, wobei die Zurückweisungsnachricht die Anzahl aktiver Paket-Daten-Kontexte anzeigt, die für die Mobilstation (20) zugelassen sind.

5. Kommunikationsschnittstelle nach Anspruch 2, wobei die Steuerungslogik (140) ferner ausgestaltet ist zum:
Bestimmen der Anzahl aktiver Paket-Daten-Kontexte für eine Mobilstation (20), die an den Dienstbereitstellungsnetzwerknoten (46) übergeben wird; und
falls die Anzahl aktiver Paket-Daten-Kontexte die Anzahl von Netzwerkdienstzugangspunkten NSAPIs (132) am Dienstbereitstellungsnetzwerkknoten (46) überschreitet, Durchführen eines von Folgendem:
Deaktivieren eines oder mehrerer Paket-Daten-Kontexte oder
Kombinieren von zwei oder mehr aktiven Paket-Daten-Kontexten zu einem einzigen Paket-Daten-Kontext, der einem Netzwerkdienstzugangspunkt NSAPI (132) zugeordnet ist, wobei der einzige Daten-Paket-Kontext entweder ein bestehender aktiver Paket-Daten-Kontext oder ein neuer aktiver Paket-Daten-Kontext ist.

6. Kommunikationsschnittstelle nach Anspruch 1, wobei die Anzahl von Verbindungsdienstzugangspunkten SAPIs (122) auf eine Anzahl erweitert wird, die gleich der Anzahl von Netzwerkdienstzugangspunkten NSAPI ist.

7. Kommunikationsschnittstelle nach Anspruch 6, wobei die Kommunikationsschnittstelle in dem Dienstbereitstellungsnetzwerkknoten (46) angeordnet ist und wobei die Steuerungslogik ferner zum Empfangen einer Steuerungsnachricht von der Mobilstation (20) ausgestaltet ist, die die Anzahl zur Verfügung stehender Verbindungsdienstzugangspunkte SAPIs (122) in der Mobilstation (20) angibt, und wobei die Steuerungsnachricht eine Parameteraushandlungsnachricht, eine Verbindungsanforderungsnachricht und/oder eine Routing-Bereich-Anforderungsnachricht umfasst.

8. Kommunikationsschnittstelle nach Anspruch 6, wobei die Kommunikationsschnittstelle in der Mobilstation (20) angeordnet ist und wobei die Steuerungslogik (140) ferner dazu ausgestaltet ist, eine Steuerungsnachricht von dem Dienstbereitstellungsnetzwerkknoten (46) zu empfangen, die die Anzahl zur Verfügung stehender Verbindungsdienstzugangspunkte SAPIs (122) in dem Dienstbereitstellungsnetzwerkknoten (46) angibt und wobei die Steuerungsnachricht eine Parameteraushandlungsantwortnachricht, eine Verbindungsannahmenachricht und/oder eine Routing-Bereich-Aktualisierungs-Annahmenachricht umfasst.

9. Kommunikationsschnittstelle nach Anspruch 6, wobei die Steuerungslogik (140) ferner ausgebildet ist zum:
Bestimmen der Anzahl aktiver Paket-Daten-Kontexte für eine Mobilstation (20), die an den Dienstbereitstellungsnetzwerkknoten (46) übergeben wird; und
falls die Anzahl aktiver Paket-Daten-Kontexte die Anzahl von Verbindungsdienstzugangspunkten SAPIs (122) am Dienstbereitstellungsnetzwerkknoten (46) überschreitet, Durchführen eines von Folgendem:
Deaktivieren eines oder mehrerer Paket-Daten-Kontexte oder
Kombinieren von zwei oder mehr aktiven Paket-Daten-Kontexten zu einem einzigen Paket-Daten-Kontext, der einem Netzwerkdienstzugangspunkt NSAPI (132) zugeordnet ist.

10. Verfahren zum Aufbauen einer Kommunikationsschnittstelle für eine Kommunikation zwischen einer Mobilstation (20) und einem Dienstbereitstellungsnetzwerkknoten (46) über eine Gb-Schnittstelle in einem GSM-Netzwerk, wobei das Verfahren Folgendes aufweist:
Zuordnen einer Mehrzahl von Netzwerkdienstzugangspunkten, die durch Netzwerkdienstzugangspunktkennungen NSAPIs (132) bezeichnet sind, zu einer Netzwerkschicht (130) einer Kommunikationsschnittstelle (200; 300);
Zuordnen einer Mehrzahl von Nutzerdatenverbindungsdienstzugangspunkten, die durch Dienstzugangspunktkennungen SAPIs (122) bezeichnet sind, zu einer Verbindungsschicht (120) der Kommunikationsschnittstelle (200; 300),
**dadurch gekennzeichnet, dass**
die Anzahl von Verbindungsdienstzugangspunkten SAPIs (122) gleich der Anzahl von Netzwerkdienstzugangspunkten NSAPIs (132) ist; und **dadurch**, dass
das Verfahren ferner das Durchführen einer Eins-zu-Eins-Zuordnung zwischen den Netzwerkdienstzugangspunkten NSAPIs (132) und den Verbindungsdienstzugangspunkten SAPIs (122) umfasst.

11. Verfahren nach Anspruch 10, wobei die Anzahl von Netzwerkdienstzugangspunkten NSAPIs (132) auf eine Anzahl beschränkt ist, die gleich der Anzahl von Verbindungsdienstzugangspunkten SAPIs (122) ist.

12. Verfahren nach Anspruch 11, wobei die Kommunikationsschnittstelle im Dienstbereitstellungsnetzwerkknoten (46) angeordnet ist, wobei das Verfahren ferner umfasst:
Empfangen einer Anforderungsnachricht von der Mobilstation (20) für eine neue Paket-Daten-Sitzung; und
Senden einer Zurückweisungsnachricht an die Mobilstation (20), wenn die Anzahl aktiver Paket-Daten-Kontexte gleich der Anzahl von Verbindungsdienstzugangspunkten SAPIs (122) ist.

13. Verfahren nach Anspruch 12, wobei die Zurückweisungsnachricht die Anzahl aktiver Paket-Daten-Kontexte anzeigt, die für die Mobilstation (20) zugelassen sind.

14. Verfahren nach Anspruch 10, ferner aufweisend:
Bestimmen der Anzahl aktiver Paket-Daten-Kontexte für eine Mobilstation (20), die an den Dienstbereitstellungsnetzwerkknoten (46) übergeben wird; und
falls die Anzahl aktiver Paket-Daten-Kontexte die Anzahl von Netzwerkdienstzugangspunkten NSAPIs (132) am Dienstbereitstellungsnetzwerkknoten (46) überschreitet, Durchführen eines von Folgendem:
Deaktivieren eines oder mehrerer Paket-Daten-Kontexte oder
Kombinieren von zwei oder mehr aktiven Paket-Daten-Kontexten zu einem einzigen Paket-Daten-Kontext, der einem Netzwerkdienstzugangspunkt NSAPIs (132) zugeordnet ist, wobei der einzige Daten-Paket-Kontext entweder ein bestehender aktiver Paket-Daten-Kontext oder ein neuer aktiver Paket-Daten-Kontext ist.

15. Verfahren nach Anspruch 10, wobei die Anzahl von Verbindungsdienstzugangspunkten SAPIs (122) auf eine Anzahl erweitert wird, die gleich der Anzahl von Netzwerkdienstzugangspunkten NSAPIs (132) ist.

16. Verfahren nach Anspruch 15, wobei die Kommunikationsschnittstelle in dem Dienstbereitstellungsnetzwerkknoten (46) angeordnet ist, wobei das Verfahren ferner das Empfangen einer Steuerungsnachricht von der Mobilstation (20) umfasst, die die Anzahl zur Verfügung stehender Verbindungsdienstzugangspunkte SAPIs (122) in der Mobilstation (20) angibt, wobei die Steuerungsnachrichten zumindest eines von Folgendem aufweisen: eine Parameteraushandlungsnachricht, eine Verbindungsanforderungsnachricht und eine Routing-Bereich-Aktualisierungs-Anforderungsnachricht.

17. Verfahren nach Anspruch 15, wobei die Kommunikationsschnittstelle in der Mobilstation (20) angeordnet ist und das Verfahren ferner das Empfangen einer Steuerungsnachricht von dem Dienstbereitstellungsnetzwerksknoten (46) umfasst, die die Anzahl zur Verfügung stehender Verbindungsdienstzugangspunkte SAPIs (122) im Dienstbereitstellungsnetzwerkknoten (46) angibt, wobei die Steuerungsnachricht zumindest eines von Folgendem aufweist: eine Parameteraushandlungsantwortnachricht, eine Verbindungsannahmenachricht und eine Routing-Bereichs-Aktualisierungs-Annahmenachricht.

18. Verfahren nach Anspruch 15, ferner aufweisend:
Bestimmen der Anzahl aktiver Paket-Daten-Kontexte für eine Mobilstation, die an den Dienstbereitstellungsnetzwerkknoten (46) übergeben wird; und
falls die Anzahl aktiver Paket-Daten-Kontexte die Anzahl von Verbindungsdienstzugangspunkten SAPIs (122) am Dienstbereitstellungsnetzwerkknoten überschreitet, Durchführen eines von Folgendem:
Deaktivieren eines oder mehrerer Paket-Daten-Kontexte oder
Kombinieren von zwei oder mehr aktiven Paket-Daten-Kontexten zu einem einzigen Paket-Daten-Kontext, der einem Netzwerkdienstzugangspunkt NSAPI (132) zugeordnet ist.

## Revendications

1. Interface de communication pour établir des communications entre une station mobile (20) et un noeud de réseau serveur (46) par l'intermédiaire d'une interface GB dans un réseau GSM, l'interface de communication (200 ; 300) étant disposée dans un noeud dudit réseau et comprenant :
une couche réseau (130) ayant une pluralité de points d'accès à des services réseaux identifiés par des Identifiants NSAPI (Identifiants de Points d'Accès à des Services Réseaux) (132) ;
une couche de liaison (120) ayant une pluralité de points d'accès à des services de liaison de données d'utilisateurs identifiés par des Identifiants SAPI (Identifiants de Points d'Accès à des Services) (122),
**caractérisée en ce que**
le nombre de points d'accès à des services de liaison SAPI (122) est égal au nombre de points d'accès à des services réseaux NSAPI (132) ; et **en ce que**
l'interface de communication comprend en outre une logique de commande (140) configurée pour effectuer une mise en correspondance bi-univoque entre lesdits points d'accès à des services réseaux NSAPI (132) et lesdits points d'accès à des services de liaison SAPI (122).

2. Interface de communication selon la revendication 1, dans laquelle le nombre de points d'accès à des services réseaux NSAPI (132) est limité à un nombre égal au nombre de points d'accès à des services de liaison SAPI (122).

3. Interface de communication selon la revendication 2, dans laquelle l'interface de communication est disposée dans le noeud de réseau serveur, et dans laquelle la logique de commande (140) est en outre configurée pour :
recevoir de la station mobile (20) un message de demande d'une nouvelle session de données par paquets ; et
envoyer à la station mobile (20) un message de rejet lorsque le nombre de contextes de données par paquets actifs est égal au nombre de points d'accès de services de liaison SAPI (122).

4. Interface de communication selon la revendication 3, dans laquelle le message de rejet indique le nombre de contextes de données par paquets actifs admis pour la station mobile (20).

5. Interface de communication selon la revendication 2, dans laquelle la logique de commande (140) est en outre configurée pour :
déterminer le nombre de contextes actifs de données par paquets pour une station mobile (20) qui est transférée au noeud de réseau serveur (46) ; et
si le nombre de contextes actifs de données par paquets est supérieur au nombre de points d'accès à des services réseaux NSAPI (132) sur le noeud de réseau serveur (46), effectuer l'une des opérations suivantes :
désactiver un ou plusieurs contextes de données par paquets ou
combiner deux ou plusieurs contextes de données par paquets actifs en un unique contexte de données par paquets associé à un point d'accès à des services réseaux NSAPI (132), l'unique contexte de données par paquets étant soit un contexte de données par paquets actif existant, soit un nouveau contexte de données par paquets actif.

6. Interface de communication selon la revendication 1, dans laquelle le nombre de points d'accès à des services de liaison SAPI (122) est étendu de façon à être égal au nombre de points d'accès à des services réseaux NSAPI.

7. Interface de communication selon la revendication 6, dans laquelle l'interface de communication est disposée dans le noeud de réseau serveur (46), et dans laquelle la logique de commande est en outre configurée pour recevoir un message de commande de la station mobile (20) qui identifie le nombre de points d'accès à des services de liaison SAPI disponibles (122) dans la station mobile (20), et dans laquelle le message de commande comprend au moins l'un d'un message de négociation de paramètres, d'un message de demande de rattachement et d'un message de demande de zone d'acheminement.

8. Interface de communication selon la revendication 6, dans laquelle l'interface de communication est disposée dans la station mobile (20), et dans laquelle la logique de commande (140) est en outre configurée pour recevoir un message de commande en provenance du noeud de réseau serveur (46) qui identifie le nombre de points d'accès à des services de liaison SAPI disponibles (122) dans le noeud de réseau serveur (46), et dans laquelle le message de commande comprend au moins l'un d'un message de réponse à la négociation de paramètres, d'un message d'acceptation de rattachement, et d'un message d'acceptation de mise à jour de la zone d'acheminement.

9. Interface de communication selon la revendication 6, dans laquelle la logique de commande (140) est en outre configurée pour :
déterminer le nombre de contextes de données par paquets actifs pour une station mobile (20) qui est transférée au noeud de réseau serveur (46) ; et
si le nombre de contextes de données par paquets actifs est supérieur au nombre de points d'accès à des services de liaison SAPI (122) sur le noeud de réseau serveur (46), effectuer l'une des opérations suivantes :
désactiver un ou plusieurs contextes de données par paquets, ou
combiner deux ou plusieurs contextes de données par paquets actifs en un unique contexte de données par paquets associé à un point d'accès à des services réseaux NSAPI (132).

10. Procédé pour établir une interface de communication destinée à établir des communications entre une station mobile (20) et un noeud de réseau serveur (46) par l'intermédiaire d'une interface Gb dans un réseau GSM, le procédé consistant à :
associer une pluralité de points d'accès à des services réseaux identifiés par des Identifiants de Points d'Accès à des Services Réseaux NSAPI (132), à une couche réseau (130) d'une interface de communication (200 ; 300) ;
associer une pluralité de points d'accès à des services de liaison de données d'utilisateurs identifiés par des Identifiants de Points d'Accès à des Services SAPI (122), à une couche de liaison (120) de l'interface de communication (200 ; 300),
**caractérisé en ce que**
le nombre de points d'accès à des services de liaison SAPI (122) est égal au nombre de points d'accès à des services réseaux NSAPI (132) ; et **en ce que**
le procédé consiste en outre à exécuter une mise en correspondance bi-univoque entre lesdits points d'accès à des services réseaux NSAPI (132) et lesdits points d'accès à des services de liaison SAPI (122).

11. Procédé selon la revendication 10, dans lequel le nombre de points d'accès à des services réseaux NSAPI (132) est limité à un nombre égal au nombre de points d'accès à des services de liaison SAPI (122).

12. Procédé selon la revendication 11, dans lequel l'interface de communication est disposée dans le noeud de réseau serveur (46), le procédé consistant en outre à :
recevoir de la station mobile (20) un message de demande d'une nouvelle session de données par paquets ; et
envoyer à la station mobile (20) un message de rejet lorsque le nombre de contextes de données par paquets actifs est égal au nombre de points d'accès à des services de liaison SAPI (122).

13. Procédé selon la revendication 12, dans lequel le message de rejet indique le nombre de contextes de données par paquets actifs autorisés pour la station mobile (20).

14. Procédé selon la revendication 10, consistant en outre à :
déterminer le nombre de contextes de données par paquets actifs pour une station mobile (20) qui est transférée au noeud de réseau serveur (46) ; et
si le nombre de contextes de données par paquets actifs est supérieur au nombre de points d'accès à des services réseaux NSAPI (132) sur le noeud de réseau serveur (46), exécuter l'une des opérations suivantes :
désactiver un ou plusieurs contextes de données par paquets, ou
combiner deux ou plusieurs contextes de données par paquets actifs en un unique contexte de données par paquets associé à un point d'accès à des services réseaux NSAPI (132), l'unique contexte de données par paquets étant soit un contexte de données par paquets actif existant, soit un nouveau contexte de données par paquets actif.

15. Procédé selon la revendication 10, dans lequel le nombre de points d'accès à des services de liaison SAPI (122) est étendu à un nombre égal au nombre de points d'accès à des services réseaux NSAPI (132).

16. Procédé selon la revendication 15, dans lequel l'interface de communication est disposée dans le noeud de réseau serveur (46), le procédé consistant en outre à recevoir de la station mobile (20) un message de commande qui identifie le nombre de points d'accès à des services de liaison SAPI (122) disponibles dans la station mobile (20), dans lequel les messages de commande comprennent au moins l'un : d'un message de négociation de paramètres, d'un message de demande de rattachement et d'un message de demande de mise à jour de la zone d'acheminement.

17. Procédé selon la revendication 15, dans lequel l'interface de communication est disposée dans la station mobile (20), le procédé consistant en outre à recevoir un message de commande du noeud de réseau serveur (46), qui identifie le nombre de points d'accès à des services de liaison SAPI (122) disponibles dans le noeud de réseau serveur (46), dans lequel le message de commande comprend au moins l'un : d'un message de réponse à la négociation de paramètres, d'un message d'acceptation de rattachement, et d'un message d'acceptation de la mise à jour de la zone d'acheminement.

18. Procédé selon la revendication 15, consistant en outre à :
déterminer le nombre de contextes de données par paquets actifs pour une station mobile qui est transférée au noeud de réseau serveur (46) ; et
si le nombre de contextes de données par paquets actifs est supérieur au nombre de points d'accès à des services de liaison SAPI (122) sur le noeud de réseau serveur, exécuter l'une des opérations suivantes :
désactiver un ou plusieurs contextes de données par paquets, ou
combiner deux ou plusieurs contextes de données par paquets actifs en un unique contexte de données par paquets associé à un point d'accès à des services réseaux NSAPI (132).
